# EUROPEAN PATENT SPECIFICATION

(11) **EP 4 431 170 B1**
(45) Date of publication and mention of the grant of the patent: **11.11.2026**
(21) Application number: 24162842.9
(22) Date of filing: 12.03.2024
(51) Int. Cl.: B01D 45/16, B04C 5/04, B04C 5/13

(54) **CHILLER WITH A CYCLONIC OIL SEPARATOR**
KÜHLER MIT ZYKLON-ÖLABSCHNEIDER
REFROIDISSEUR AVEC SÉPARATEUR D'HUILE CYCLONIQUE

(30) Priority: 15.03.2023 IT 202300004878
(43) Date of publication of application: 18.09.2024
(73) Proprietor: Daikin Applied Europe S.p.A., 00072 Ariccia (RM) (IT)
(72) Inventor: LO PRESTI, Marco, 00143 ROMA (IT); D'AGOSTINO, Alessandro, 00172 ROMA (IT); PAPALE, Daniele, 00149 ROMA (IT)
(74) Representative: Conti, Marco

(56) References cited:
- WO-A1-2013/057366
- WO-A1-2018/111907
- US-A- 2 085 506
- US-A- 3 771 294
- US-A- 4 572 783
- US-A1- 2005 173 335

## Description

This invention relates to a chiller with a cyclonic oil separator. Separators are widely used to remove particles from fluid streams.

For example, oil separators are used in refrigeration cycle systems, which use a refrigerant fluid subjected to one or more changes of state, to remove particles of lubricant which are entrained in a refrigerant which is compressed in the compressor of the refrigeration cycle.

Oil separation is a crucial aspect in chillers, in fact a non-efficient separation affects the cooling performances. In particular, a high oil concentration in the refrigerant in flooded or spray evaporators strongly reduces their efficiency, since these evaporators require a higher oil separation with respect to other types.

Moreover, the available space for the separator is restricted by the fan section in chillers and this limits the available height of the separator and therefore its internal surface dedicated to the separation of the oil from the refrigerant.

Cyclonic separators are one of the most common types of separators used for the separation of oil from the refrigerant fluid. However, these separators can also be used for the separation of other particles, such as water from a gas.

Typically, in a cyclonic separator, the gas stream containing entrained particles enter the separator and bend around the inside of the body of the separator towards the bottom part of the separator. However, the entrained particles are not capable of changing direction as fast as the gas does, therefore, heavy particles (entrained particles like oil or water) hit immediately the inner wall of the separator, fall down and move towards an outlet at the bottom. The separated particles can be further collected in a reservoir. The gas stream also travels downwards within the separator and at the bottom of the separator due to the vortex effect (created due to the very fast movement of the gas inside the separator) moves upwards towards a gas exit at the top. The filtering properties of the cyclone are defined by its geometry. As the cyclonic separator becomes narrower it can remover smaller (lighter) particles.

Patent documents US 20200056818, US 20110056379, WO 2016127063 A1 and WO 2016135692 describe known oil separators.

Patent document WO 2016127063 regards a cyclone lubricant separator, including a shell, a plurality of inlets horizontally placed on the shell at the same plane or different planes, a vertical vapor outlet, a discharge tube inside the shell and in fluid communication with the inlet and the vapor outlet to discharge refrigerant vapor separated from the lubricant, and a flow director on the discharge tube.

Oil separator of patent document US20200056818 includes a trapping material like mesh to trap the entrained particles like oil, patent document WO 2016135692 suggests a combination of a filtering element and a cyclone element and US 20110056379 combines a cyclonic system, a swirl vane separator and a coalescent system.

Using filters in separators can increase the separation efficiency, however, adding filters has some drawbacks as well, including pressure loss in the separator and consequently increase of cost. In addition, filters need to be replaced often.

Generally, pressure drop across the cyclone is an important issue in a cyclone separator. In fact, cyclonic separators have high operating costs due to the pressure drop. The pressure drop significantly affects the performance parameters of a cyclonic separator; therefore, it is of high importance to reduce the pressure loss across the separator while maintaining the separation efficiency high.

Another problem which a separator can face is that the collected particles in the reservoir may entrained again into the clean gas stream.

Further examples of know separators are disclosed by patent documents US200517335A1, WO2013057366A1, US4572783A, US2085506A and US3771294A.

A chiller with cyclonic oil separators is disclosed in WO2018/111907.

Scope of the present invention is to overcome at least one of the aforementioned drawbacks.

This scope is achieved by a chiller with a cyclonic separator according to the appended claims.

The present invention provides a chiller with a cyclonic oil separator for separating entrained particles in a gas stream. The cyclonic oil separator (or the separator) comprises a cylindrical casing. The cylindrical casing (or the casing) extends from a first end to a second end along a vertical axis parallel to the weight force.

The separator comprises an inlet. The inlet may be connected to the first end of the casing. The inlet is configured to receive the gas stream. The inlet is configured to convey the stream tangentially to the inside of the casing, in a first horizontal axis transversal to the vertical axis and tangential to the casing. The separator comprises also a gas outlet. The gas outlet is configured to discharge the gas free of the entrained particles. Moreover, the separator comprises a particle outlet. The particle outlet is configured to discharge the entrained particles separated from the gas stream. The separator may comprise a cylindrical mouth. The cylindrical mouth is coaxial to the casing. The cylindrical mouth includes a first part and a second part. Moreover, the cylindrical mouth extends vertically from the first part positioned inside the first end of the casing to the second part, projecting vertically from the casing. In an example, the gas outlet is connected to the second part of the cylindrical mouth. The gas outlet is oriented tangentially to convey the discharged gas in a second horizontal axis transversal to the vertical axis and tangential to the cylindrical mouth. Such a solution allows to create a vortex near the gas outlet of the separator which helps channel the gas stream, free of the entrained particles, to exit the separator; therefore, pressure drop across the separator is reduced. Moreover, this solution allows to have a separator with a smaller height, which is advantageous because the available space for the separator is restricted by the fan section in chillers.

Therefore, it is possible to have a cyclonic oil separator with less height, lower pressure drop and a high separation while there is no trade-off between the separation efficiency and the pressure drop. In other words, in order to reduce the pressure drop of the separator, the separation efficacy of the separator is not reduced. The good oil separation achieved allows to use spray and flooded evaporator without decreasing of performances.

In an example, a ratio between a horizontal cross section area of the cylindrical mouth and a horizontal cross section area of the casing is less than 0.7.

Moreover, in an example, the ratio between the horizontal cross section area of the cylindrical mouth and the horizontal cross section area of the casing is greater than 0.6.

Such a solution guarantees a cyclone effect inside the separator casing also in the upward direction which roughly doubles the separation effect.

In an example, a ratio between a height of the second part of the cylindrical mouth and a diameter of the inlet is less than 3.

In an example, the ratio between the height of the second part of the cylindrical mouth and the diameter of the inlet is greater than 2.

In particular, the ratio between the height of the second part of the cylindrical mouth and the diameter of the inlet is greater than 2.3 and smaller than 2.7. Such a solution allows to place the gas outlet on the second part of the cylindrical mouth and to create a vortex in the second part of the cylindrical mouth and near the gas outlet which is strong enough to convey the gas stream to the outside of the separator while keeping the height of the separator small.

The design of the cylindrical mouth according to the dimensions described in the examples provided above allows to have an enhanced oil separation performance for oil with different range of particle dimension, and guarantees a sufficient vortex at the entrance, and provides an increased separation surface.

It is to be mentioned that the separator according to the present description is a stand-alone separator and can be used with any type of evaporator or condenser.

The separator comprises a particulate collection zone. The particulate collection zone is configured to contain the entrained particles separated from the gas stream. The separator comprises also a closing plate. The closing plate is configured to separate the particulate collection zone from the inside of the casing where the gas stream circulates so that the separated particles cannot entrain in the gas.

In an example, a ratio between a surface area of the closing plate and the horizontal cross section area of the casing falls between a range of 0.80 < S8/S2 < 0.85.

Such a configuration provides an optimal free space between the closing plate and the cylindrical casing which allows the separated oil particles to move towards the particulate collection zone and to avoid the entrainment of the separated oil particles in the gas stream.

The closing plate has a hexagonal shape. Such a configuration allows to reduce the risk of the already separated oil to be captured by the high turbulence and velocity of the gas stream at the bottom of the casing and consequently improves the separation.

The separator may comprise a frustoconical wall. The frustoconical wall is placed inside the casing. The frustoconical wall is below the cylindrical mouth. The frustoconical wall is tapered towards the second end of the casing. Such a solution help increase the velocity of the gas stream, and therefore a stronger vortex can be obtained which improves the oil separation. The gas stream moves with a higher velocity towards the bottom of the casing, as the gas enters the frustoconical wall. Moreover, the velocity of the gas stream is higher at the bottom part (narrower part) of the frustoconical wall 9 with respect to the upper part of frustoconical wall. Consequently, smaller particles can be separated from the gas stream by using the frustoconical wall.

In an example, a ratio of a diameter of the cylinder mouth and a diameter of the cone end part (or the end part of the frustoconical wall) is greater than 1.1 or lower than 0.8.

This solution helps prevent entrainment of the separated oil particles into the gas flow due to the high turbulence near the particulate collection zone. In an example, an internal end cone cross area (or cross-section area of the end part of the frustoconical wall) and the surface area of the closing plate respect the following condition: $0.80 < S 8 / S 9 < 0.85 .$

Such a configuration provides an optimal free space between the closing plate and the end cone which allows the separated oil particles to exit the cone and move towards the particulate collection zone and to avoid the entrainment of the separated oil particles in the gas stream.

The chiller comprises a compressor. The compressor is configured for increasing the pressure of a refrigerant. The chiller comprises also an evaporator. The chiller comprises a condenser. The chiller comprises an expansion valve. The chiller comprises an oil separator. The oil separator is configured for separating entrained particles in a gas stream. The gas stream may be the refrigerant compressed in the compressor. The oil separator is according to the present description. According to another aspect of the present description, the present invention provides a method for separating entrained particles in a gas stream in a chiller.

The method comprises a step of providing a casing of a cyclonic oil separator. The casing extends from a first end to a second end along a vertical axis parallel to the weight force. The method may comprise also a step of providing a cylindrical mouth. The cylindrical mouth is coaxial to the casing. The cylindrical mouth extends vertically from a first part positioned inside the first end of the casing to a second part which projects vertically from the casing. The method comprises a step of conveying a stream of gas with entrained particles tangentially into the casing of the cyclonic separator through an inlet. The stream of gas is conveyed into the casing along a first horizontal axis transversal to the vertical axis and tangential to the casing, so that the gas contacts the cylindrical mouth after entering the casing and swirls within the casing in a downward direction.

Moreover, the method comprises a step of collecting the entrained particles separated from the gas stream and directing them towards a particle outlet. The method comprises a step of discharging the gas free of entrained particles, through a gas outlet. In an example the gas outlet is connected to the second part of the cylindrical mouth. The gas outlet conveys the discharged gas in a second horizontal axis transversal to the vertical axis and tangential to the cylindrical mouth. Such a solution allows to create a vortex at the gas outlet of the separator which helps channel the gas stream to exit the separator; therefore, pressure drop across the separator is reduced. Moreover, this solution allows to have a separator with a smaller height, which is advantageous because the available space for the separator is restricted by the fan section in chillers.

Therefore, it is possible to have a cyclonic oil separator with less height, lower pressure drop and a high separation while there is no trade-off between the separation efficiency and the pressure drop. In other words, in order to reduce the pressure drop, the separation efficacy of the separator is not reduced. The good oil separation achieved allows to use spray and flooded evaporator without decreasing of performances.

This and other features of the invention will become more apparent from the following detailed description of a preferred, non-limiting example embodiment of it, with reference to the accompanying drawings, in which:

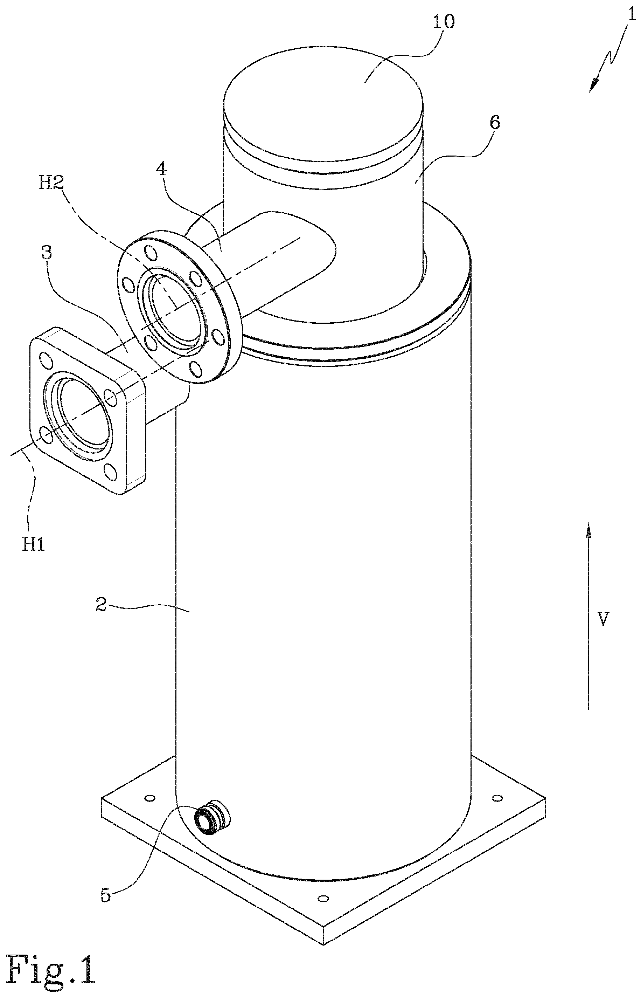

- figure 1 illustrates a cyclonic oil separator of a chiller according to the present invention,

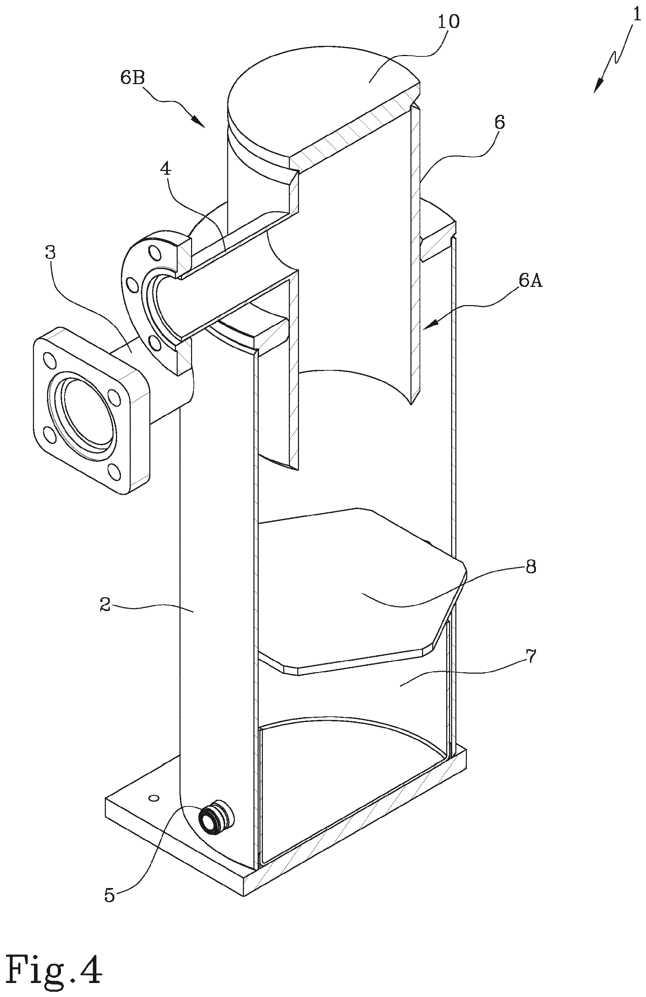

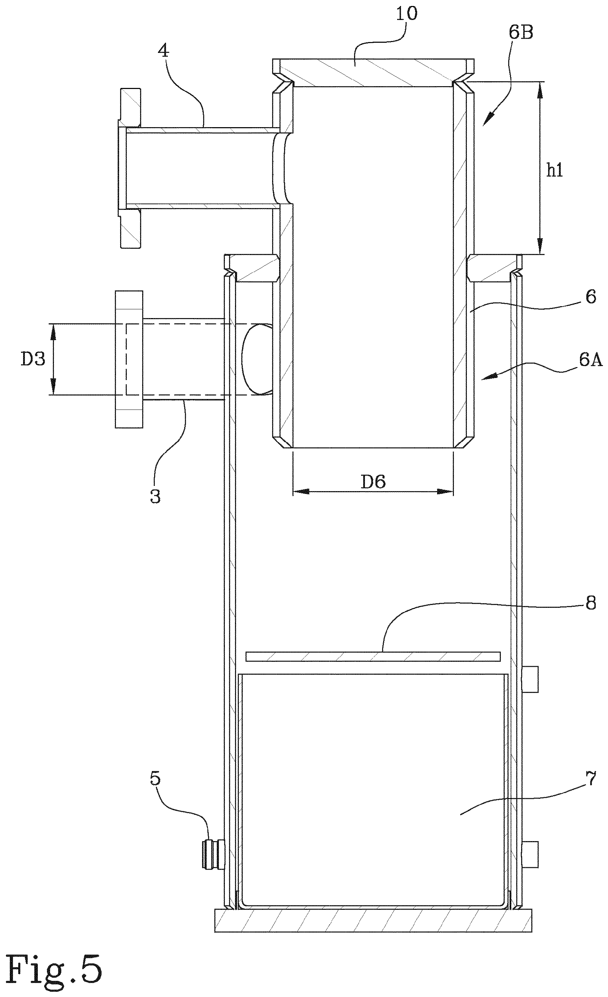

- figures 2-5 illustrate sectional views the cyclonic oil separator;

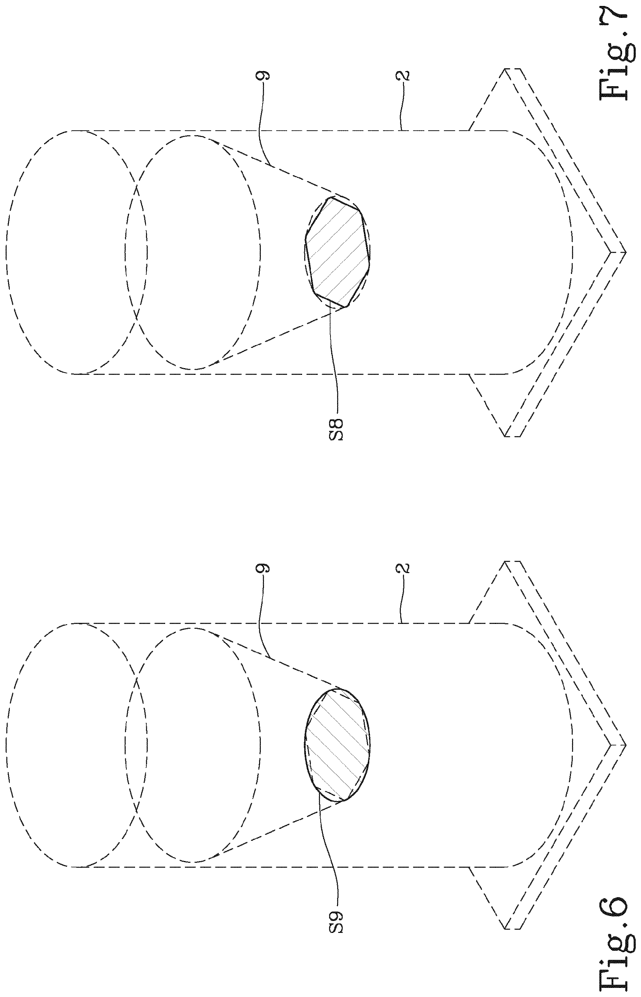

- figures 6 and 7 illustrate the frustoconical wall and the closing plate;

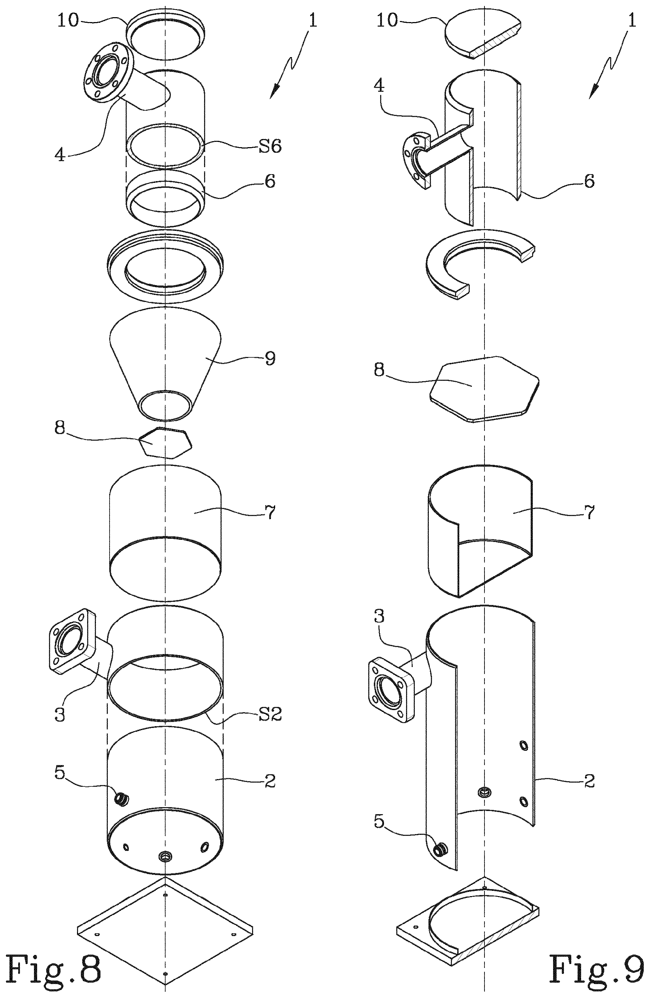

- figures 8 and 9 are exploded views of the cyclonic oil separator;

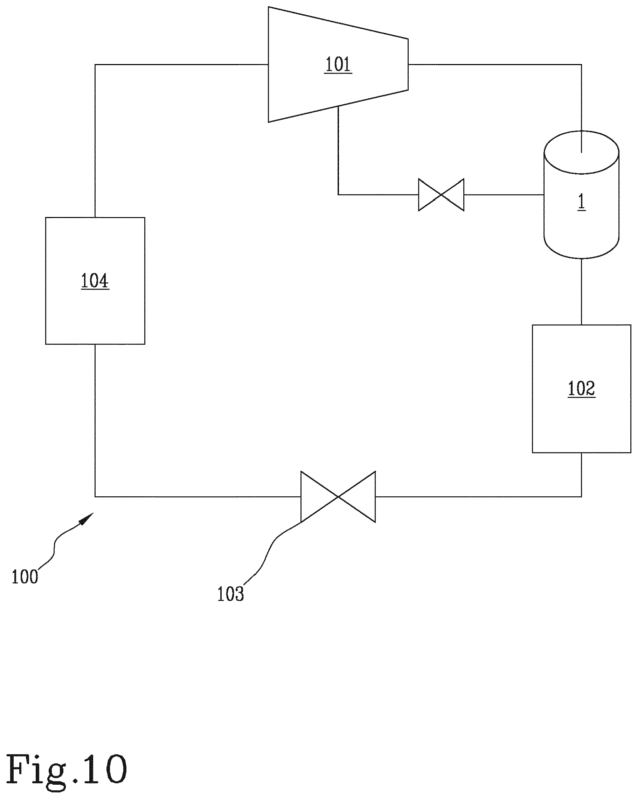

- figure 10 illustrates a block diagram of a chiller according to the present invention.

With reference to the figures the cyclonic oil separator of a chiller according to the present invention is indicated by number 1. The cyclonic oil separator (or the separator) is configured for separating entrained particles in a gas stream. The cyclonic oil separator comprises a cylindrical casing 2. The cylindrical casing 2 (or the casing) extends from a first end to a second end along a vertical axis V. The vertical axis V is parallel to the weight force. The separator 1 comprises an inlet 3. The inlet 3 may be connected to the first end of the casing 2. The inlet 3 is connected to the casing 2 horizontally. The inlet 3 is configured to receive the gas stream. The inlet 3 is configured to convey the gas stream tangentially to the inside of the casing 2. In particular, the inlet 3 is configured to convey the gas stream to the inside of the casing 2 in a first horizontal axis H1. The first horizontal axis H1 is transversal to the vertical axis V and is tangential to the casing 2.

Moreover, the separator 1 comprises a particle outlet 5. The particle outlet 5 is configured to discharge the entrained particles separated from the gas stream. In an example, the entrained particles are oil particles entrained in the gas stream. In another example the entrained particles are liquids other than oil entrained in the gas stream. For example, the entrained particles may be the liquid part of the refrigerant.

The separator 1 may comprise a cylindrical mouth 6. The cylindrical mouth 6 is coaxial to the casing 2. The cylindrical mouth 6 includes a first part 6A and a second part 6B. Moreover, the cylindrical mouth 6 extends vertically from the first part 6A to the second part 6B. In an example, the first part 6A of the cylindrical mouth 6 is positioned inside the first end of the casing 2. The second part 6B of the cylindrical mouth 6 projects vertically from the casing 2. The first part 6A of the cylindrical mouth 6 is open to the inside of the casing 2. The second part 6B of the cylindrical mouth 6 is closed. In particular, the second part of the cylindrical mouth is closed with a lid 10. In an example, the inlet 3 is placed on the casing 2 in a way that the inlet 3 faces the first part 6A of the cylindrical mouth 6. The cylindrical mouth is placed inside the casing 2 so that a vortex is created at the inlet 3 and the stream of gas can swirl downwards. The entrained particles are separated from the gas stream as a result of this fast movement of the gas stream towards the bottom of the casing.

In an example, a ratio between a horizontal cross section area of the cylindrical mouth S6 and a horizontal cross section area of the casing S2 is less than 0.7.

Moreover, in an example, the ratio between the horizontal cross section area of the cylindrical mouth S6 and the horizontal cross section area of the casing S2 is greater than 0.6.

In an example, a ratio between a height of the second part 6B of the cylindrical mouth h1 and a diameter of the inlet D3 is less than 3.

In an example, the ratio between the height of the second part of the cylindrical mouth h1 and the diameter of the inlet D3 is greater than 2.

Preferably, the ratio between the height of the second part of the cylindrical mouth h1 and the diameter of the inlet D3 falls between the following range: $2.3 < h 1 / D 3 < 2.7 .$

The separator 1 comprises also a gas outlet 4. The gas outlet 4 is configured to discharge the gas free of the entrained particles. In an example, the gas outlet 4 is connected to the second part 6B of the cylindrical mouth 6. In an example, the gas outlet 4 is placed above the inlet 3 and parallel to the inlet 3 with respect to the horizontal direction H. In particular, the gas outlet 4 is oriented tangentially to convey the discharged gas in a second horizontal axis H2. The second horizontal axis H2 is transversal to the vertical axis V and is tangential to the cylindrical mouth 6.

The separator 1 comprises also a particulate collection zone 7. The particulate collection zone 7 is configured to contain the entrained particles separated from the gas stream. The particulate collection zone 7 is placed inside the casing 2. The particulate collection zone 7 is placed at the bottom of the casing 2. The particle outlet 5 is connected to the particulate collection zone 7 in order to discharge the separated particles. The separator 1 comprises a closing plate 8. The closing plate 8 is placed inside the cylindrical casing 2. The closing plate 8 is placed at a bottom part of the casing 2. The closing plate 8 is configured to separate the particulate collection zone 7 from the inside of the casing where the gas stream circulates so that the separated particles cannot entrain in the gas. In particular, the closing plate 8 separates the zone inside the casing where there is a vortex due to the fast movement of the gas stream (where there is oil separation) from the particulate collection zone where the separated oil particles which fall on the internal walls of the casing and move downward (due to the gravity) are deposited.

In an example, a ratio between a surface area of the closing plate S8 and the horizontal cross section area of the casing S2 falls between a range of $0.80 < S 8 / S 2 < 0.85 .$

The closing plate 8 may have different shapes. For example, the closing plate 8 may be square or hexagonal or octagonal. The closing plate 8 has a hexagonal shape.

In an example of embodiment, the separator 1 comprises a frustoconical wall 9. The frustoconical wall 9 is placed inside the casing 2. The frustoconical wall 9 is placed below the cylindrical mouth 6 and tapered towards the second end of the casing 2. The frustoconical wall has the shape of a frustum of a cone. The frustoconical wall 9 has a top part and an and end part. The end part is the part which is tapered towards the second end of the casing 2. The top part is wider than the end part and is placed in proximity to the first part 6A of the cylindrical mouth 6.

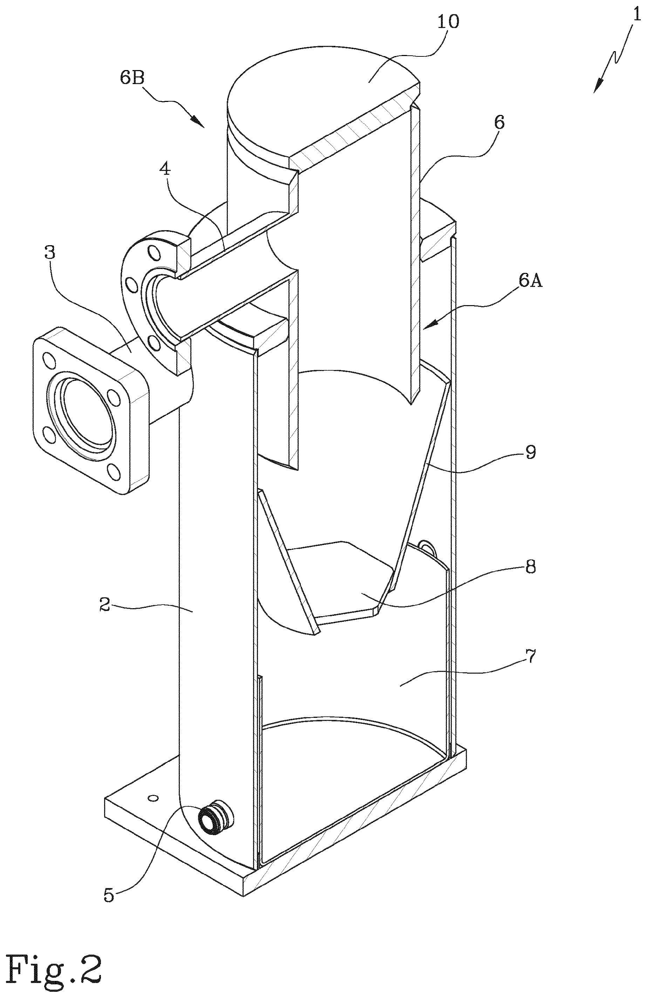

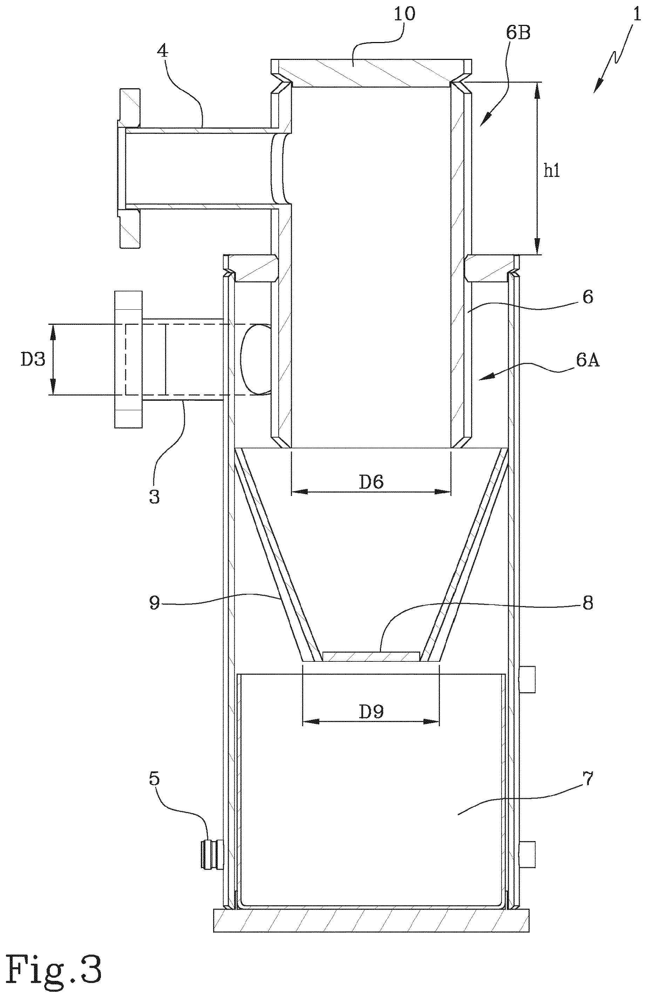

Therefore, as shown in figures 2 and 3, a wider side of the frustoconical wall 9 is placed near the first part 6A of the cylindrical mouth 6. In this example, the closing plate is placed below the frustoconical wall 9. In an example, the closing plate 8 is positioned at the end part of the frustoconical wall 9 (or the cone end part). The closing plate 8 is positioned at the end part of the frustoconical wall 9 to partially close the cone end part.

In an example, a ratio between a diameter of the cylinder mouth D6 and a diameter of the cone end part (or the end part of the frustoconical wall) D9 is greater than 1.1. In an example the ratio between the diameter of the cylinder mouth D6 and the diameter of the cone end part D9 is smaller than 0.8. therefore, the closing plate 8 separates the volume inside the frustoconical wall 9 from the collection zone 7.

Moreover, in an example, a ratio between the surface area of the closing plate S8 and an internal end cone cross area S9 falls between the following range: $0.80 < S 8 / S 9 < 0.85 .$

In another example, the oil separator may be without the frustoconical wall 9.

The chiller 100 comprises a compressor 101. The compressor 101 is configured to compress a refrigerant and discharge the compressed refrigerant. Oil is used to lubricate the compressor, to remove heat produced during the compression process, and to provide better seals between the compressor elements to improve compressor efficiency. Therefore, the compressor 101 is configured to discharge a fluid mixture of refrigerant and oil. The chiller comprises also a condenser 102. The condenser 102 is configured to condense the refrigerant compressed by the compressor 101. The chiller 100 comprises also an expansion valve 103. The expansion valve is configured to reduce the pressure of the refrigerant condensed by the condenser 102. The chiller 100 comprises an evaporator 104. The evaporator 104 is configured to vaporize the refrigerant reduced in pressure by the expansion valve 103. The chiller comprises also an oil separator 1. The oil separator 1 may be placed between the compressor 101 and the condenser 102. The oil separator 1 is configured for separating entrained particles in the refrigerant. In an example the entrained particles are oil particles. Preferably, the separated oil is returned to the compressor 101 for reuse. The oil separator is according to the present description.

According to another aspect of the present description, the present invention provides a method for separating entrained particles in a gas stream in a chiller. The method comprises a step of providing a casing 2 of a cyclonic oil separator 1. The casing 2 is preferably cylindrical. The casing 2 extends from a first end to a second end along a vertical axis V. The vertical axis V is parallel to the weight force. The method may comprise also a step of providing a cylindrical mouth 6. The cylindrical mouth 6 is coaxial to the casing 2. Moreover, the cylindrical mouth 6 extends vertically from a first part 6A positioned inside the first end of the casing 2 to a second part 6B which projects vertically from the casing 2. The method comprises a step of conveying a stream of gas with entrained particles tangentially into the casing 2 of the cyclonic separator 1 through an inlet 3. The stream of gas is conveyed into the casing 2 along a first horizontal axis H1. The first horizontal axis H1 is transversal to the vertical axis V and tangential to the casing 2. As a result, the stream of gas, contacts the cylindrical mouth 6 after entering the casing 2, through the inlet 3, and swirls within the casing 2 in a downward direction.

Moreover, the method comprises a step of collecting the entrained particles separated from the gas stream and directing them towards a particle outlet 5. In particular, the separated particles are contained in a particulate collection zone 7. The particulate collection zone 7 is separate from the gas stream through a closing plate 8. As the gas stream swirls towards the bottom part of the casing the entrained particles which are heavier with respect to the gas are separated from the gas stream. The separated particles hit inner walls of the casing 2 and, fall down and towards the particle outlet 5. At the bottom of the casing 2, due to the high velocity of the gas stream a vortex is created which leads to an upward movement of the gas stream along the casing 2.

The method comprises a step of discharging the gas free of entrained particles, through a gas outlet 4. In an example the gas outlet 4 is connected to the second part of the cylindrical mouth 6. The gas outlet 4 conveys the discharged gas in a second horizontal axis H2. The second horizontal axis H2 is transversal to the vertical axis V and tangential to the cylindrical mouth 6. At the bottom of the casing 2, due to the vortex effect which is created by to the fast movement of the gas stream inside casing 2, the gas stream moves upwards towards the gas outlet 4. In an example, the method comprises a step of providing the casing a frustoconical wall 9 (or a cone). The frustoconical wall is inserted inside the casing 2 and below the cylindrical mouthing. the gas stream after leaving the cylindrical mouth 6 enters the frustoconical wall 9. The diameter of the frustoconical wall becomes narrower along the vertical axis V and towards the bottom of the casing 2. Therefore, an upper part of the frustoconical wall 9 which is near the second part 6B of the cylindrical mouthing is wider with respect to a bottom part of the frustoconical wall 9. Consequently, the gas stream moves with a higher velocity towards the bottom of the casing 2, as the gas enters the frustoconical wall. Moreover, the velocity of the gas stream is higher at the bottom part (narrower part) of the frustoconical wall 9 with respect to the upper part of frustoconical wall 9.

## Claims

1. A chiller comprising:
- a compressor (101);
- an evaporator (102);
- a condenser (104);
- an expansion valve (103);
- a cyclonic oil separator (1),
- a cyclonic oil separator (1) for separating entrained particles in a gas stream, comprising:
- a cylindrical casing (2), extending from a first end to a second end along a vertical axis (V) parallel to the weight force;
- an inlet (3) connected to the first end of the casing (2) and configured to receive the gas stream and to convey the stream tangentially to the inside of the casing (2), in a first horizontal axis (H1) transversal to the vertical axis (V) and tangential to the casing (2);
- a gas outlet (4) configured to discharge the gas free of the entrained particles;
- a particle outlet (5) configured to discharge the entrained particles separated from the gas stream;
- a cylindrical mouth (6), coaxial to the casing (2), the cylindrical mouth (6) including a first part (6A) and a second part (6B) and extending vertically from the first part (6A), positioned inside the first end of the casing (2), to the second part (6B), projecting vertically from the casing (2);
wherein the gas outlet (4) is connected to the second part (6B) of the cylindrical mouth (6) and is oriented tangentially to convey the discharged gas in a second horizontal axis (H2) transversal to the vertical axis (V) and tangential to the cylindrical mouth (6), the cyclonic oil separator (1) further comprising:
- a particulate collection zone (7) configured to contain the entrained particles separated from the gas stream;
- a closing plate (8) to separate the particulate collection zone (7) from the inside of the casing (2) where the gas stream circulates so that the separated particles cannot entrain in the gas., wherein the closing plate (8) has a hexagonal shape.

2. The chiller according to claim 1, wherein a ratio between a horizontal cross section area of the cylindrical mouth (S6) and a horizontal cross section area of the casing (S2) and is less than 0.7.

3. The chiller according to claim 2, wherein the ratio between the horizontal cross section area of the cylindrical mouth (S6) and the horizontal cross section area of the casing (2) is greater than 0.6.

4. The chiller according to any of the previous claims wherein a ratio between a height of the second part of the cylindrical mouth (h1) and a diameter of the inlet (D3) is less than 3.

5. The chiller according to claim 4, wherein the ratio between the height of the second part of the cylindrical mouth (h1) and the diameter of the inlet (D3) is greater than 2.

6. The chiller according to claim 4 or 5 wherein the following condition is respected $2.3 < h 1 / D 3 < 2.7 .$

7. The chiller according to any of the previous claims , wherein a ratio between a surface area of the closing plate (S8) and the horizontal cross section area of the casing (S2) falls between a range of 0.8 < S8/S2 < 0.85.

8. The chiller according to any of the previous claims, further comprising a frustoconical wall (9), placed inside the casing (2) below the cylindrical mouth (6) and tapered towards the second end of the casing.

9. The chiller according to claim 8, wherein a ratio of a diameter of the cylinder mouth (D6) and a diameter of the cone end part (D9) is greater than 1.1 or lower than 0.8.

10. The chiller according to claim 8 or 9, wherein an internal end cone cross area (S9) and the surface area of the closing plate (S8) respects the following condition $0.80 < S 8 / S 9 < 0.85$

11. An oil separation method for separating entrained particles in a gas stream, in a chiller comprising a compressor (101), an evaporator (102), a condenser (104), an expansion valve (103) and a cyclonic oil separator (1), comprising, the method comprising the following steps:
- providing a casing (2) of the cyclonic separator (1), extending from a first end to a second end along a vertical axis (V) parallel to the weight force;
- providing a cylindrical mouth (6) coaxial tothe casing (2) and extending vertically from a first part (6A) positioned inside the first end of the casing (2), to a second part (6B), projecting vertically from the casing;
- conveying a stream of gas with entrained particles tangentially into the casing (2) of the cyclonic separator (1) through an inlet (3), along a first horizontal axis (H) transversal to the vertical axis (V) and tangential to the casing (2), so that the gas contacts the cylindrical mouth after entering the casing and swirls within the casing in a downward direction;
- collecting the entrained particles separated from the gas stream and directing them towards a particle outlet (5);
- discharging the gas free of entrained particles, through a gas outlet (4) connected to the second part (6B) of the cylindrical mouth, the gas outlet (4) conveying the discharged gas in a second horizontal axis (H) transversal to the vertical axis (V) and tangential to the cylindrical mouth (6),
- collecting and retaining the entrained particles separated from the gas in a particulate collection zone (7);
- separating the particulate collection zone (7) from the inside of the casing (2) where the gas stream circulates by means of a closing plate (8), so that the separated particles cannot entrain in the gas;
wherein the closing plate (8) has a hexagonal shape.

12. The oil separation method of claim 11, comprising a step of providing a frustoconical wall (9), placed inside the casing (2) below the cylindrical mouth (6) and tapered towards the second end of the casing.

## Patentansprüche

1. Kühler, umfassend:
- einen Kompressor (101);
- einen Verdampfer (102);
- einen Kondensator (104);
- ein Expansionsventil (103);
- einen Zyklon-Ölabscheider (1),
- einen Zyklon-Ölabscheider (1) zum Abscheiden von mitgeführten Partikeln in einem Gasstrom, umfassend:
- ein zylindrisches Gehäuse (2), das sich von einem ersten Ende zu einem zweiten Ende entlang einer vertikalen Achse (V) parallel zur Gewichtskraft erstreckt;
- einen Einlass (3), der mit dem ersten Ende des Gehäuses (2) verbunden und so ausgelegt ist, dass er den Gasstrom empfängt und den Strom tangential in das Innere des Gehäuses (2) befördert, in einer ersten horizontalen Achse (H1), die quer zur vertikalen Achse (V) und tangential zum Gehäuse (2) verläuft;
- einen Gasauslass (4), der so ausgelegt ist, dass er das Gas frei von den mitgeführten Partikeln ablässt;
- einen Partikelauslass (5), der so ausgelegt ist, dass er die vom Gasstrom abgeschiedenen mitgeführten Partikel ablässt;
- eine zylindrische Mündung (6), koaxial zum Gehäuse (2), wobei die zylindrische Mündung (6) einen ersten Teil (6A) und einen zweiten Teil (6B) einschließt und sich vertikal vom ersten Teil (6A), der innerhalb des ersten Endes des Gehäuses (2) angeordnet ist, bis zu dem zweiten Teil (6B) erstreckt, der vertikal aus dem Gehäuse (2) herausragt;
wobei der Gasauslass (4) mit dem zweiten Teil (6B) der zylindrischen Mündung (6) verbunden und tangential ausgerichtet ist, um das abgelassene Gas in einer zweiten horizontalen Achse (H2) zu befördern, die quer zur vertikalen Achse (V) und tangential zur zylindrischen Mündung (6) verläuft, wobei der Zyklon-Ölabscheider (1) ferner Folgendes umfasst:
- eine Partikelsammelzone (7), die so ausgelegt ist, dass sie die aus dem Gasstrom abgeschiedenen mitgeführten Partikel enthält;
- eine Verschlussplatte (8) zum Trennen der Partikelsammelzone (7) vom Inneren des Gehäuses (2), in dem der Gasstrom zirkuliert, sodass die abgeschiedenen Partikel nicht vom Gas mitgeführt werden können, wobei die Verschlussplatte (8) eine sechseckige Form aufweist.

2. Kühler nach Anspruch 1, wobei ein Verhältnis zwischen einer horizontalen Querschnittsfläche der zylindrischen Mündung (S6) und einer horizontalen Querschnittsfläche des Gehäuses (S2) kleiner als 0,7 ist.

3. Kühler nach Anspruch 2, wobei das Verhältnis zwischen der horizontalen Querschnittsfläche der zylindrischen Mündung (S6) und der horizontalen Querschnittsfläche des Gehäuses (2) größer als 0,6 ist.

4. Kühler nach einem der vorhergehenden Ansprüche, wobei ein Verhältnis zwischen einer Höhe des zweiten Teils der zylindrischen Mündung (h1) und einem Durchmesser des Einlasses (D3) kleiner als 3 ist.

5. Kühler nach Anspruch 4, wobei das Verhältnis zwischen der Höhe des zweiten Teils der zylindrischen Mündung (h1) und dem Durchmesser des Einlasses (D3) größer als 2 ist.

6. Kühler nach Anspruch 4 oder 5, wobei die folgende Bedingung erfüllt ist $2 , 3 < h 1 / D 3 < 2 , 7 .$

7. Kühler nach einem der vorhergehenden Ansprüche, wobei ein Verhältnis zwischen einem Oberflächenbereich der Verschlussplatte (S8) und der horizontalen Querschnittsfläche des Gehäuses (S2) in einem Bereich von 0,8 < S8/S2 < 0,85 liegt.

8. Kühler nach einem der vorhergehenden Ansprüche, ferner umfassend eine kegelstumpfförmige Wand (9), die innerhalb des Gehäuses (2) unterhalb der zylindrischen Mündung (6) platziert ist und sich zum zweiten Ende des Gehäuses hin verjüngt.

9. Kühler nach Anspruch 8, wobei ein Verhältnis eines Durchmessers der zylindrischen Mündung (D6) zu einem Durchmesser des kegelförmigen Endteils (D9) größer als 1,1 oder kleiner als 0,8 ist.

10. Kühler nach Anspruch 8 oder 9, wobei eine innere Querschnittsfläche des Endkegels (S9) und der Oberflächenbereich der Verschlussplatte (S8) die folgende Bedingung erfüllen $0 , 80 < S 8 / S 9 < 0 , 85 .$

11. Ölabscheideverfahren zum Abscheiden von mitgeführten Partikeln in einem Gasstrom in einem Kühler, der einen Kompressor (101), einen Verdampfer (102), einen Kondensator (104), ein Expansionsventil (103) und einen Zyklon-Ölabscheider (1) umfasst, wobei das Verfahren die folgenden Schritte umfasst:
- Bereitstellen eines Gehäuses (2) des Zyklonabscheiders (1), das sich von einem ersten Ende zu einem zweiten Ende entlang einer vertikalen Achse (V) parallel zur Gewichtskraft erstreckt;
- Bereitstellen einer zylindrischen Mündung (6), die koaxial zum Gehäuse (2) ist und sich vertikal von einem ersten Teil (6A), der innerhalb des ersten Endes des Gehäuses (2) angeordnet ist, bis zu einem zweiten Teil (6B) erstreckt, der vertikal aus dem Gehäuse herausragt;
- Befördern eines Gasstroms mit mitgeführten Partikeln tangential in das Gehäuse (2) des Zyklonabscheiders (1) durch einen Einlass (3), entlang einer ersten horizontalen Achse (H), die quer zur vertikalen Achse (V) und tangential zum Gehäuse (2) verläuft, sodass das Gas nach dem Eintritt in das Gehäuse auf die zylindrische Mündung trifft und innerhalb des Gehäuses in Abwärtsrichtung verwirbelt wird;
- Sammeln der aus dem Gasstrom abgeschiedenen mitgeführten Partikel und deren Weiterleiten hinführend zu einem Partikelauslass (5);
- Ablassen des von den mitgeführten Partikeln befreiten Gases durch einen Gasauslass (4), der mit dem zweiten Teil (6B) der zylindrischen Mündung verbunden ist, wobei der Gasauslass (4) das abgelassene Gas in einer zweiten horizontalen Achse (H) befördert, die quer zur vertikalen Achse (V) und tangential zur zylindrischen Mündung (6) verläuft,
- Sammeln und Zurückhalten der vom Gas abgeschiedenen mitgeführten Partikel in einer Partikelsammelzone (7);
- Trennen der Partikelsammelzone (7) vom Inneren des Gehäuses (2), in dem der Gasstrom zirkuliert, mittels einer Verschlussplatte (8), sodass die abgeschiedenen Partikel nicht vom Gas mitgeführt werden können;
wobei die Verschlussplatte (8) eine sechseckige Form aufweist.

12. Ölabscheideverfahren nach Anspruch 11, umfassend einen Schritt zum Bereitstellen einer kegelstumpfförmigen Wand (9), die innerhalb des Gehäuses (2) unterhalb der zylindrischen Mündung (6) platziert ist und sich zum zweiten Ende des Gehäuses hin verjüngt.

## Revendications

1. Refroidisseur, comprenant :
- un compresseur (101) ;
- un évaporateur (102) ;
- un condensateur (104) ;
- une vanne de détente (103) ;
- un séparateur d'huile cyclonique (1),
- un séparateur d'huile cyclonique (1) pour séparer les particules entraînées dans un flux de gaz, comprenant :
- un carter cylindrique (2), s'étendant d'une première extrémité à une seconde extrémité le long d'un axe vertical (V) parallèle à la force de poids ;
- une entrée (3) reliée à la première extrémité du carter (2) et configurée pour recevoir le flux de gaz et pour transporter le flux tangentiellement à l'intérieur du carter (2), selon un premier axe horizontal (H1) transversal à l'axe vertical (V) et tangent au carter (2) ;
- une sortie de gaz (4) configurée pour évacuer le gaz exempt des particules entraînées ;
- une sortie de particules (5) configurée pour évacuer les particules entraînées séparées du flux de gaz ;
- un embout cylindrique (6), coaxial au carter (2), l'embout cylindrique (6) incluant une première partie (6A) et une seconde partie (6B), et s'étendant verticalement de la première partie (6A), située à l'intérieur de la première extrémité du carter (2), à la seconde partie (6B), faisant saillie verticalement du carter (2) ;
dans lequel la sortie de gaz (4) est reliée à la seconde partie (6B) de l'embout cylindrique (6) et est orientée tangentiellement pour transporter le gaz évacué dans un second axe horizontal (H2) transversal à l'axe vertical (V) et tangent à l'embout cylindrique (6), le séparateur d'huile cyclonique (1) comprenant en outre :
- une zone de collecte des particules (7) configurée pour contenir les particules entraînées séparées du flux de gaz ;
- une plaque de fermeture (8) pour séparer la zone de collecte des particules (7) de l'intérieur du carter (2) où le flux de gaz circule de sorte que les particules séparées ne puissent pas être entraînées dans le gaz, dans lequel la plaque de fermeture (8) a une forme hexagonale.

2. Refroidisseur selon la revendication 1, dans lequel un rapport entre une surface de section transversale horizontale de l'embout cylindrique (S6) et une surface de section transversale horizontale du carter (S2) est inférieur à 0,7.

3. Refroidisseur selon la revendication 2, dans lequel le rapport entre la surface de section transversale horizontale de l'embout cylindrique (S6) et la surface de section transversale horizontale du carter (2) est supérieur à 0,6.

4. Refroidisseur selon l'une quelconque des revendications précédentes, dans lequel un rapport entre une hauteur de la seconde partie de l'embout cylindrique (h1) et un diamètre de l'entrée (D3) est inférieur à 3.

5. Refroidisseur selon la revendication 4, dans lequel le rapport entre la hauteur de la seconde partie de l'embout cylindrique (h1) et le diamètre de l'entrée (D3) est supérieur à 2.

6. Refroidisseur selon la revendication 4 ou 5, dans lequel la condition suivante est respectée $2 , 3 < h 1 / D 3 < 2 , 7 .$

7. Refroidisseur selon l'une quelconque des revendications précédentes, dans lequel un rapport entre une aire de surface de la plaque de fermeture (S8) et la surface de section transversale horizontale du carter (S2) se situe dans une plage de 0,8 < S8/S2 < 0,85.

8. Refroidisseur selon l'une quelconque des revendications précédentes, comprenant en outre une paroi tronconique (9), placée à l'intérieur du carter (2) en dessous de l'embout cylindrique (6) et effilée vers la seconde extrémité du carter.

9. Refroidisseur selon la revendication 8, dans lequel un rapport d'un diamètre de l'embout du cylindre (D6) et d'un diamètre de la partie d'extrémité du cône (D9) est supérieur à 1,1 ou inférieur à 0,8.

10. Refroidisseur selon la revendication 8 ou 9, dans lequel une surface de section transversale interne de cône d'extrémité (S9) et l'aire de surface de la plaque de fermeture (S8) respectent la condition suivante $0 , 80 < S 8 / S 9 < 0 , 85 .$

11. Procédé de séparation d'huile pour séparer des particules entraînées dans un flux de gaz, dans un refroidisseur comprenant un compresseur (101), un évaporateur (102), un condensateur (104), une vanne de détente (103) et un séparateur d'huile cyclonique (1), le procédé comprenant les étapes suivantes :
- fournir un carter (2) du séparateur cyclonique (1), s'étendant d'une première extrémité à une seconde extrémité le long d'un axe vertical (V) parallèle à la force de poids ;
- fournir un embout cylindrique (6) coaxiale au carter (2) et s'étendant verticalement d'une première partie (6A) positionnée à l'intérieur de la première extrémité du carter (2), à une seconde partie (6B), faisant saillie verticalement du carter ;
- transporter un flux de gaz avec des particules entraînées tangentiellement dans le carter (2) du séparateur cyclonique (1) à travers une entrée (3), le long d'un premier axe horizontal (H) transversal à l'axe vertical (V) et tangent au carter (2), de sorte que le gaz entre en contact avec l'embout cylindrique après entrer dans le carter et tourbillonne à l'intérieur du carter dans une direction descendante ;
- collecter les particules entraînées séparées du flux de gaz et les diriger vers une sortie de particules (5) ;
- évacuer le gaz exempt de particules entraînées, à travers une sortie de gaz (4) reliée à la seconde partie (6B) de l'embout cylindrique, la sortie de gaz (4) transportant le gaz évacué selon un second axe horizontal (H) transversal à l'axe vertical (V) et tangent à l'embout cylindrique (6),
- collecter et retenir les particules entraînées séparées du gaz dans une zone de collecte des particules (7) ;
- séparer la zone de collecte des particules (7) de l'intérieur du carter (2) où le flux de gaz circule au moyen d'une plaque de fermeture (8), de sorte que les particules séparées ne puissent pas être entraînées dans le gaz ;
dans lequel la plaque de fermeture (8) a une forme hexagonale.

12. Procédé de séparation d'huile selon la revendication 11, comprenant une étape de fournir une paroi tronconique (9), placée à l'intérieur du carter (2) en dessous de l'embout cylindrique (6) et effilée vers la seconde extrémité du carter.
